# EUROPÄISCHE PATENTANMELDUNG

(11) **EP 0 530 584 A2**
(43) Veröffentlichungstag der Anmeldung: **10.03.1993**
(21) Anmeldenummer: 92114044.8
(22) Anmeldetag: 18.08.1992
(51) Int. Cl.: G01N 21/53

(54) **Anordnung zum Messen von Abgasen in Verbrennungsmotoren**

(30) Priorität: 02.09.1991 DE 4129068
(71) Anmelder: GRUNDIG E.M.V. Elektro-Mechanische Versuchsanstalt Max Grundig holländ. Stiftung & Co. KG., D-90762 Fürth (DE)
(72) Erfinder: Hallas, Ernst, Dr. rer. nat., GRUNDIG E.M.V., W-8510 Fürth (DE)
(74) Vertreter: Dreykorn-Lindner, Werner, Dipl.-Ing.

(57) **Zusammenfassung**

Anordnung zum Messen von Abgasen in Verbrennungsmotoren, insbesondere in Dieselmotoren, bei der die Meßwerte mittels dynamischer Messung gewonnen werden.

Aufgabe ist es, eine Anordnung anzugeben, bei der die integrierende Wirkung der Meßzelle in Bezug auf den impulsförmigen Anstieg des Rußanteils im Abgas vermieden wird.

Dies wird erreicht, indem die Meßzelle so ausgebildet ist, daß sie sich an das Sondenrohr derart anschließt, daß die Gasführungsrichtung beibehalten wird und der Querschnitt der Meßzelle mit zunehmender Länge aufgeweitet wird.

## Beschreibung

Die Erfindung betrifft eine Anordnung zum Messen von Abgasen in Verbrennungsmotoren, insbesondere in Dieselmotoren.

In Abgasen von Otto- und Dieselmotoren befinden sich chemische Stoffe, die entsprechend gesetzlicher Regelungen bestimmte Grenzwerte nicht übersteigen dürfen. Weiterhin lasssen sich auf Grund der Konzentration bestimmter Stoffe im Abgas fehlerhafte Motoreinstellungen erkennen und teilweise sogar genauer definieren. Aus diesen Gründen werden bereits seit längerer Zeit sowohl in Werkstätten als auch in Einrichtungen, die auf Grund gesetzlicher Vorschriften Kraftfahrzeuge auf ihren technischen Zustand untersuchen, Abgastestgeräte eingesetzt.

Zur Messung der Trübung von Gasen, insbesondere zur Messung des Rußanteils in Abgasen von Dieselmotoren, sind bereits Verfahren und Einrichtungen bekannt, bei denen mittels eines speziellen Filterpapieres im Abgasstrom die durch den Rußanteil verursachte Gewichtszunahme des Filterpapieres oder die Farbtönung des Filterpapieres als Maß für den Rußgehalt ausgewertet werden.

Weiterhin sind Verfahren zur Vermessung von Dieselabgasen bekannt, bei denen die Opazität des Dieselrauchs gemessen wird. Diese Messverfahren ermitteln den Lichtverlust, der entsteht, wenn mit einer Lichtquelle definiert in eine Abgassäule eingestrahlt wird. Aus der von einem Photodetektor gemessenen Lichstärke wird der Lichtverlust, der durch die Abgassäule verursacht wird, ermittelt. Der Lichtverlust ist als Funktion des Rußanteils des Dieselabgases darstellbar.

Bei diesen optischen Trübungsmeßverfahren bzw. bei den optischen Trübungsmeßgeräten werden im wesentlichen das quasistatische und das dynamische Meßverfahren verwendet. Bei den quasistatischen Meßverfahren wird die Messung auf einem Rollen- oder einem Motorenprüfstand bei Vollast und bei Teillast durchgeführt.

Aus der Druckschrift DE 3526458 A1 ist eine Einrichtung zur optischen Trübungsmessung von Gasen, insbesondere zur Messung des Rußanteils in Abgasen von Dieselmotoren bekannt, die nach dem dynamischen Meßverfahren arbeitet. Dort wird die Drehmasse des Motors als Belastung genutzt und der Motor für die Bestimmung des Rußanteils aus dem Leerlauf heraus durch Gasstöße in hohe Drehzahlen beschleunigt. Mittels Lichtabsorptionsmessung wird jeweils die maximale Trübung des Abgases bestimmt und in der Speichereinheit eines Rechners abgelegt.

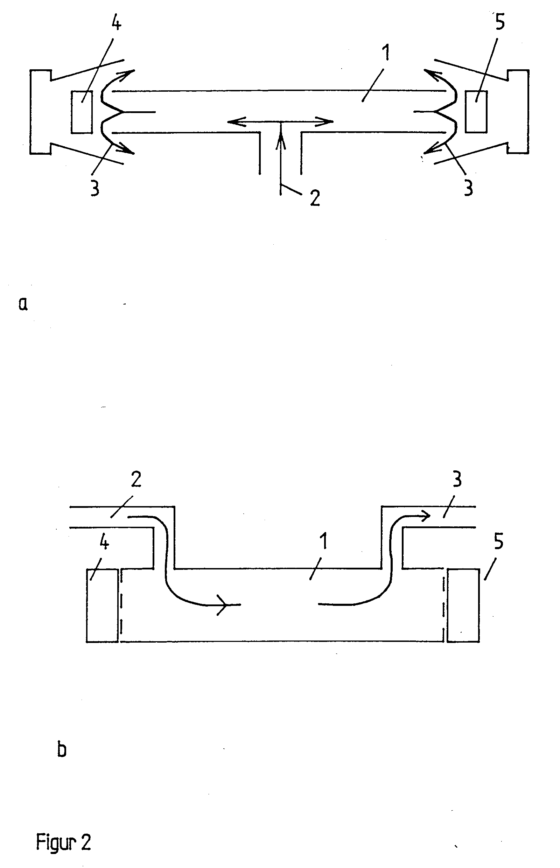

Die dynamische Messung hat gegenüber der quasistatischen den Vorteil, daß die gewonnenen Meßergebnisse mehr Aussagekraft besitzen, da gerade im Lastwechsel der maximale Rußausstoß zu beobachten ist. Aus diesem Grund hat sich dieses Meßverfahren in der Praxis durchgesetzt. Probleme bestehen jedoch hinsichtlich Impulsverzerrungen durch die Form der Meßkammern.
Beispielhaft für den Aufbau bekannter Meßanordnungen sind in Figur 2 die prinzipiellen Aufbauten der Dieselabgasmeßgeräte SITEST 450 (Figur 2a) der Firma Siemens und RRT 100 (Figur 2b) der Firma Bosch dargestellt. In dieser Figur sind jeweils die Meßzelle 1, die Gaseinlaßführung 2, die Auslaßführung 3, der Lichtsender 4 und der Detektor 5 dargestellt. Bei den bekannten Dieselabgasmeßgeräten nach Figur 2 sind die Meßzellen so angeordnet, daß der Abgasstrom von der Meßsonde senkrecht in die Meßzelle einströmt. Der Abgasstrom wird also umgeleitet. Bei einer plötzlichen Drehzahlerhöhung des Motors erfolgt zum Zeitpunkt der Auslösung ein impulsförmiger Anstieg des Rußausstoßes, der sich bis zum Erreichen der Höchstdrehzahl auf einen niedrigeren Wert einpendelt. Durch die Umleitung des Abgasstromes entstehen Verzerrungen des impulsförmigen Anstieges des Rußaustoßes, die zu fehlerhaften Meßwerten führen. Weiterhin ist bei den bekannten Anordnungen eine zuverlässige Messung erst möglich, wenn die Messkammer mit dem Abgas gefüllt ist. Auf diese Weise tritt aber eine integrierende Wirkung durch die Meßzelle in Bezug auf den ursprünglichen Impuls auf, so daß erst nach gewissen Umrechnungen auf den Impulswert des Rußanteils bei Lastwechsel geschlossen werden kann.

Aus der Druckschrift GB-PS-1 329 995 ein optisches Gasanalysegerät bekannt, bei dem die Gasführungsrichtung nach dem Gaseinlaßbereich beibehalten wird. Unmittelbar nach dem Gaseinlaßbereich weitet sich der Gasführungsweg auf und mündet in eine Meßzelle mit konstantem Querschnitt, wobei die Meßoptik zur Bestimmung der Gasparameter quer zur Gasführungsrichtung angebracht ist. Bei dieser Anordnung wirkt sich nachteilig aus, daß unmittelbar nach dem Gaseinlaß über einen kurzen Längenbereich eine große Aufweitung vorgesehen ist, die zu Verwirbelungen im Gasfluß führt und somit zu Impulsverzerrungen. Durch die große Aufweitung innerhalb eines kurzen Bereiches ist es dort notwendig Gasführungswände einzufügen, durch die eine Verteilung des Gases über den gesamten Querschnitt der Meßzelle erreicht werden soll. Diese Gasführungswände verursachen aber weitere Impulsverzerrungen.

Aufgabe der Erfindung ist es deshalb, eine Anordnung anzugeben, bei der die Impulsverzerrungen und die integrierende Wirkung der Meßzelle in Bezug auf den impulsförmigen Anstieg des Rußanteils im Abgas vermieden wird.

Dies wird gemäß der Erfindung dadurch erreicht, daß sich die Meßzelle an das Sondenrohr derart anschließt, daß die Gasführungsrichtung beibehalten wird und der Querschnitt der Meßzelle mit zunehmender Länge l aufgeweitet wird, wobei der Querschnitt der Meßzelle vorzugsweise ein Rechteck beschreibt, dessen Breite b konstant bleibt und dessen Höhe h stetig vergrößert wird. Die aus dem Lichtsender und dem Lichtdetektor bestehende Meßoptik ist so angeordnet, daß die Strahlrichtung des Lichtsenders quer zur Abgasführungsrichtung ist und die Meßzelle in Richtung der Höhe h durchstrahlt wird.
Durch eine derartige Anordnung wird erreicht, daß keine oder nur minimale Impulsverzerrungen auftreten, und daß der Druckverlustwiderstand, der mit der Länge des Sondenrohres bzw. der Meßzelle anwächst, durch die Aufweitung kompensiert bzw. überkompensiert wird. Ferner erfolgt durch die erfindungsgemäße Gestaltung der Meßzelle keine integrierende Wirkung, da der Abgasweg keine Staubereiche durch plötzliche Richtungswechsel aufweist.
In einer vorteilhaften Ausgestaltung der Erfindung ist es vorgesehen, daß die Zunahme der Höhe h des rechteckigen Querschnitts der Meßzelle linear mit der Länge l der Meßzelle erfolgt. Auf diese Weise wird der linear ansteigende Druckverlustwiderstand ideal ausgeglichen.

In einer weiteren vorteilhaften Ausgestaltung der Erfindung wird vorgesehen, daß im Anschluß an die Meßoptik die Meßzelle ein kurzes Stück im Querschnitt zunehmend verläuft und anschließend ein oder mehrere Krümmungen und/oder Drehungen um einen vorgebbaren Winkel durchführt. Auf diese Weise wird eine relativ gute Streulichtfreiheit im Meßbereich der optischen Anordnung erreicht, da das Streulicht von außen nur über Mehrfachreflexionen in die Meßzelle gelangen kann.

Ein weiterer Vorteil ist, daß keine Strömungsverfälschung durch eine unmittelbar nach der Meßoptik einsetzende Querschnittveränderung erzeugt wird. Vorzugsweise verläuft der Querschnitt auch im Bereich der Krümmungen und/oder Drehungen zunehmend.
Eine weitere vorteilhafte Ausgestaltung der Erfindung besteht darin, im Bereich des Abgasaustrittes, vorzugsweise nach der ersten Krümmung nach der Meßzelle, Nebenluftschlitze anzubringen, über die variabel Nebenluft zur Verfügung gestellt wird. Durch diese Nebenluftschlitze wird in vorteilhafter Weise erreicht, daß eine Verfälschung der Meßergebnisse durch nicht angepaßte Absaugvorrichtungen sicher vermieden wird.

Um den Einfluß von Streulicht in der Meßzelle möglichst gering zu halten sieht eine weitere vorteilhafte Ausgestaltung der Erfindung vor, daß der Innenraum der Meßzelle und der anschließenden Weiterführung in dunkler Farbe gestaltet ist.

Im folgenden wird die Erfindung an Hand der Figuren näher erläutert. Es zeigen:
- Figur 1: eine Meßzelle und die Weiterführung der Meßzelle gemäß der Erfindung
- Figur 2: Meßzellen nach dem Stand der Technik

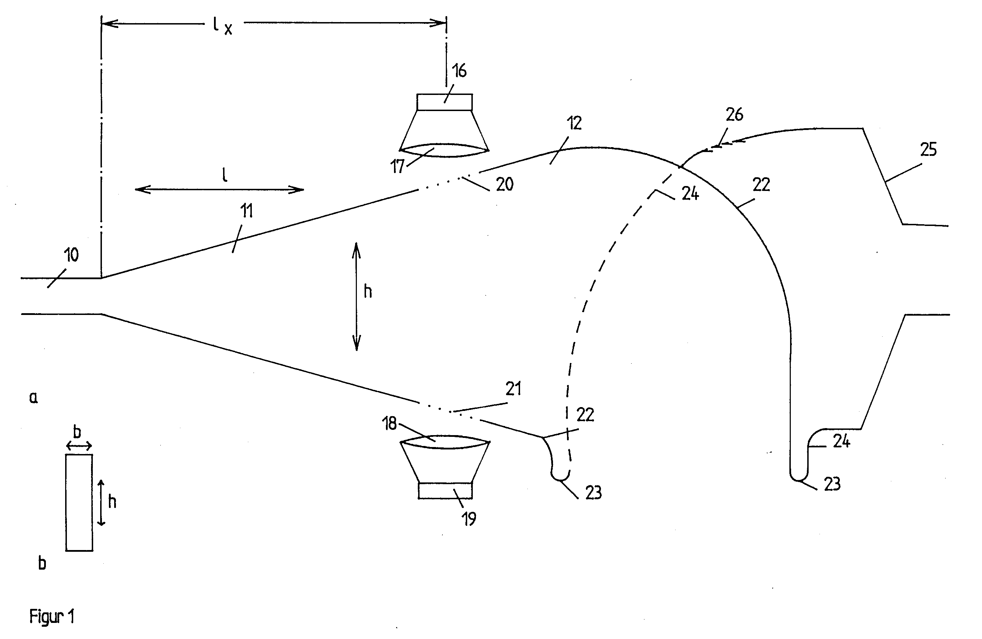

In Figur 1a wird das zu testende Dieselabgas über das Sondenrohr 10 zur Meßzelle 11 geführt. Die Meßzelle 11 ist so ausgeführt, daß kein plötzlicher Übergang oder keine plötzliche Änderung des Gasführungsweges auftritt. Am Ende des Sondenrohres 10 schließt die Meßzelle 11 derart an, daß sich der Querschnitt der Meßzelle mit zunehmender Länge l so aufweitet, daß die Breite b konstant bleibt und die Höhe h stetig zunimmt, wobei die Zunahme der Höhe h linear oder entsprechend einer anderen Funktion, beispielsweise gemäß der e-Funktion, zunimmt. Bei linearer Zunahme ergibt sich eine trichterförmige Form der Meßzelle 11, wobei die trichterförmige Aufweitung nur in eine Richtung geht. Für die Funktionsweise ist die Aufweitung und die Beibehaltung der Gasführungsrichtung entscheidend. Die Form der Aufweitung kann dabei weitgehend frei gewählt werden und an bestimmte vorgegebene Merkmale, wie beispielsweise die Gehäuseform des Abgastestgerätes, angepaßt werden. In einem wählbaren Abstand lₓ vom Ende des Sondenrohres ist die Meßoptik angebracht. Diese Meßoptik besteht aus dem Lichtsender 16, der Sammellinse 17 und dem Lichtfenster 20, durch das der im Lichtsender 16 erzeugte und durch die Sammellinse 17 gebündelte Meßlichtstrahl in die Meßzelle 11 einstrahlt. Der Meßlichtstrahl verläßt die Meßzelle 11 durch das Lichtaustrittsfenster 21 und gelangt über die Sammellinse 18 an den Lichtdetektor 19. Die an den Lichtsender 16 angelegte Ansteuerung bzw. die am Lichtdetektor 19 angeschlossene Auswerteschaltung ist in der Figur nicht dargestellt. Die Ansteuerung und Auswertung kann mit bekannten Mitteln durchgeführt werden.

Die Meßoptik ist so angeordnet, daß die Meßzelle der Höhe nach, d.h. entlang der längeren Seite des rechteckigen Querschnitts, durchstrahlt wird. Im Anschluß an die Meßoptik weitet sich der Querschnitt noch für ein kurzes Stück in der vorherigen Form auf, um dann, bei gleichem Querschnitt, eine Biegung von etwa 90^{o} im Bereich 22 auszuführen. Die Meßzelle 11 geht nach der Meßoptik ohne plötzliche Änderung der Abgasführungsrichtung in die Abgasabführung 12 über. Im Bereich 23 wird eine Biegung um etwa 180^{o} vollzogen. Daran anschließend erfolgt im Bereich 24 eine weitere Biegung um etwa 90^{o}. An die Abgasabführung 12 schließt sich eine übliche Absaugvorrichtung 25 an. Um eine Beeinflussung der Meßergebnisse durch eine beispielsweise zu starke Absaugvorrichtung zu vermeiden, können vorzugsweise im Biegungsbereich 24 Nebenluftschlitze 26 vorgesehen werden. Auf diese Weise wird bei zu großer Pumpleistung der Absaugvorrichtung Nebenluft angesaugt, so daß ein erhöhter Abzug des zu messenden Abgases vermieden wird.

## Patentansprüche

1. Anordnung zum Messen von Abgasen in Verbrennungsmotoren, insbesondere von Dieselmotoren, bei der der Rußanteil des Abgasses mittels Lichtabsorptionsmessung bestimmt wird, wobei das Abgas über ein Sondenrohr (10) in eine Meßzelle (11) geführt wird und beim Übergang des Sondenrohres (10) in die Meßzelle (11) die Gasführungsrichtung beibehalten wird und die Meßoptik (17,18) quer zur Abgasführungsrichtung angeordnet ist,
**dadurch gekennzeichnet**, **daß** der Querschnitt der Meßzelle (11) mit zunehmender Länge stetig und über die gesamte Länge der Meßzelle aufgeweitet wird, wobei im Bereich der Meßoptik (17,18) die stetige Aufweitung nicht unterbrochen wird.

2. Anordnung nach Anspruch 1, **dadurch gekennzeichnet**, **daß** die Meßzelle (11) einen rechteckigen Querschnitt hat, der sich mit zunehmender Länge in einer Richtung aufweitet.

3. Anordnung nach Anspruch 1 oder 2, **dadurch gekennzeichnet**, **daß** die Zunahme des Querschnitts der Meßzelle (11) in einer Richtung linear erfolgt.

4. Anordnung nach Anspruch 1 oder 2, **dadurch gekennzeichnet, daß** die Meßzelle (11) sich mit zunehmender Länge trichterförmig aufweitet.

5. Anordnung nach einem oder mehreren der Ansprüche 1 bis 4, **dadurch gekennzeichnet**, **daß** die Meßzelle (11) im Anschluß an die Meßoptik noch ein kurzes Sück im Querschnitt zunehmend verläuft und anschließend als Abgasabführung (12) mindestens eine Krümmung oder Drehung um einen oder mehrere vorgebbare Winkel aufweist.

6. Anordnung nach Anspruch 5, **dadurch gekennzeichnet**, **daß** der Querschnitt auch in den Krümmungsbereichen aufgeweitet wird.

7. Anordnung nach einem oder mehreren der Ansprüche 1 bis 6, **dadurch gekennzeichnet, daß** am Abgasaustritt Nebenluftschlitze vorgesehen sind, über die variabel Nebenluft eingesaugt wird.

8. Anordnung nach einem oder mehreren der Ansprüche 1 bis 7, **dadurch gekennzeichnet**, **daß** der Innenraum der Meßzelle (11) und der Abgasabführung (12) zur Vermeidung von Lichtreflexionen in dunkler Farbe gestaltet ist.
